# EUROPEAN PATENT SPECIFICATION

(11) **EP 4 170 207 B1**
(45) Date of publication and mention of the grant of the patent: **02.04.2025**
(21) Application number: 22202089.3
(22) Date of filing: 18.10.2022
(51) Int. Cl.: F16K 1/52, F16K 31/385, F16K 31/40

(54) **SIMPLIFIED HYDRAULIC SERVO-ACTUATED VALVE**
VEREINFACHTES HYDRAULISCHES SERVOBETÄTIGTES VENTIL
SOUPAPE À SERVOCOMMANDE HYDRAULIQUE SIMPLIFIÉE

(30) Priority: 19.10.2021 IT 202100026819
(43) Date of publication of application: 26.04.2023
(73) Proprietor: Lodolo, Alberto, 17015 Celle Ligure (SV) (IT)
(72) Inventor: LODOLO, Alberto, 17015 Celle Ligure (SV) (IT); SALERNO, Antonio, 20156 Milano (IT)
(74) Representative: Marietti, Andrea

(56) References cited:
- EP-A1- 3 149 373
- EP-B1- 3 149 373
- US-A- 4 360 037
- US-A1- 2004 222 394
- US-A1- 2008 035 220

## Description

The present invention relates to a hydraulic servo-actuated valve according to the preamble of the main claim. Hydraulic servo-actuated valves can be controlled by two-way or three-way operating members.

An operating member may comprise, for example, a pilot or a solenoid electro-valve.

The pilot is adapted to continuously adjust the opening of the valve, which can also be left partially open.

Usually, the solenoid electro-valve opens or closes the valve whereas an intermediate position of partial opening of the valve is not possible.

Two-way operating members are less expensive than three-way operating members.

The hydraulic servo-actuated valves comprise a valve body, an actuator, which is usually a diaphragm made of rubbery material, and a lid.

The valve body comprises an inlet duct, an outlet duct and a main opening placed between the two ducts.

The actuator is arranged at the main opening and forms, together with the lid, an actuating chamber.

The actuator can also act as a shutter, or the valve can comprise a separate shutter, such as a piston adapted to be moved by the actuator between a closed position and an open position, thereby closing and opening a passage that allows the inlet duct to be in communication with the outlet duct.

In valves adapted to be connected to a two-way operating member, the actuator comprises a calibrated hole that allows the inlet duct to be in communication with the actuating chamber, so that the fluid continues to flow from the inlet duct to the actuating chamber.

Alternatively, the valve may comprise a labyrinth dissipator arranged between the inlet duct and the actuating chamber.

The two-way operating member is arranged on the valve and is adapted to close or open the connection between the actuating chamber and the outlet duct.

A pressure drop is produced by the calibrated hole and the labyrinth dissipator so that the inflow rate of the actuating chamber is limited and results to be less than the flow rate that can be discharged into the outlet duct. When the operating member connects the actuating chamber with the outlet duct, since in the actuating chamber the outflow rate is greater than the inflow rate, the actuating chamber empties and the valve opens.

When the operating member blocks the connection between the actuating chamber and the outlet duct, the actuating chamber is filled due to the fluid entering through the calibrated hole or the labyrinth dissipator, and the valve is closed.

Because of their structure, in the hydraulic servo-actuated valves with two-way operating members, when the valve is open there is a continuous flow through the calibrated hole or labyrinth dissipator.

The calibrated hole has a through section smaller than the discharge duct, which allows the actuating chamber to be in communication with the outlet duct through the operating member.

On the other hand, the labyrinth dissipator creates, at the inlet of the actuating chamber, a tortuous path which reduces the inflow rate.

In both cases, when the operating member connects the actuating chamber to the outlet duct, the outflow rate is greater than the inflow rate and the actuating chamber empties.

When the valve is open, a small flow rate of fluid continues to enter the actuating chamber through the calibrated hole or labyrinth dissipator, but this flow rate is immediately discharged into the outlet duct thus allowing the valve to remain open.

If the water is not perfectly clean, this continuous flow through the calibrated hole or labyrinth dissipator, which occurs in valves controlled by two-way operating members, contributes to cause the calibrated hole or labyrinth dissipator to clog up.

For this reason, such valves are generally used in gardening, where the water flowing through the valve is clean and often potable.

On the other hand, servo-actuated valves with three-way operating members are suitable for agricultural use, even if water is not perfectly clean.

Water for agricultural use may contain soil, sand or small pieces of leaves or wood or different kinds of impurities. In such valves, the three-way operating member is connected to the inlet duct, the outlet duct and the actuating chamber via actuation ducts.

Since the water may contain soil or other substances that could clog the actuation ducts, in these valves there is always a filter, for example cigarette-like or cylindrically shaped, arranged inside the inlet duct so as to be hit by the water flow perpendicular to its side surface.

This way, the filter tends to clog up upstream but to remain clean downstream because of the large pressure difference which is formed between the upstream portion of the filter surface, which is directly hit by the fluid, and the downstream portion.

For this reason, such filters, which penetrate into the inlet duct so as to be directly hit by the fluid, preferably in a direction perpendicular to their surface, are called self-cleaning.

It is of course possible that even if a filter is self-cleaning, it has to be occasionally cleaned.

An irrigation valve is generally more expensive than a gardening valve, the diameter being equal. The reason is that, since a gardening valve uses clean water, it is simpler and is made so that a two-way operating member, which is less expensive than the three-way operating member, is mounted thereon.

However, the lower cost of valves with two-way operating members encourages some people to use them even when the water is not perfectly clean or even for agricultural uses, with the problem that they easily clog up and stop working. Several solutions have been devised to solve this problem. For example, the E-Pic valve manufactured by Irritrol, and the Super-Gal 75-series and 80-series valves manufactured by Dorot and operated by a two-way operating member, comprise a labyrinth dissipator which can be pulled out in the axial direction, i.e., in a direction parallel to that followed by the flow in the inlet duct, cleaned, and then put back in place.

The RainBird Company manufactures a valve with a hole on the actuator and with a disc filter connected to the actuator and arranged in the inlet duct.

For this reason, when properly oriented, the filter turns out to be self-cleaning, since the downstream side tends to remain free of dirt.

The problem is that in order to clean the filter, the lid has to be disassembled and the actuator has to be removed, which is a quite time-consuming and laborious operation.

Several manufacturers make a valve in which the calibrated hole is arranged in the center of the actuator and a rod enters the calibrated hole, thus cleaning it, when the actuator shifts from the closed position to the open position.

The Hunter Company manufactures a valve that comprises a cylindrical filter arranged in the center of the actuator. Such a cylindrical filter is arranged in a recess of the valve so that the fluid lightly touches it in the direction of the filter axis tangentially to its outer surface. For this reason, the filter is not in a self-cleaning position and the valve comprises a scraper that runs on the outer surface of the filter, thus cleaning it, when the actuator shifts from the closed position to the open position and vice versa.

Obviously, such a device has the disadvantage of being quite complicated and fragile.

A problem related to valves with three-way operating members is that they are more expensive than those with two-way operating members.

A problem related to valves with two-way operating members is that they easily clog up if the water passing through the valve is not perfectly clean.

A problem related to valves having two-way operating members and a filter arranged, for example, on the calibrated hole, such as the valve manufactured by RainBird, is that when the filter cleaning is required, it results laborious because the lid has to be removed and the valve opened.

US 2004/222394 A1 discloses a servo-actuated hydraulic valve according to the preamble of claim 1.

Therefore, object of the present invention is to implement a hydraulic servo-actuated valve, which can overcome the above-mentioned drawbacks, in particular an object is to implement a low-cost hydraulic servo-actuated valve.

Another object is to implement a hydraulic servo-actuated valve with reduced soiling even when used for agricultural irrigation, that is to say with water that is not perfectly clean.

A further object is to implement a hydraulic servo-actuated valve that is quick and easy to clean if it becomes clogged.

Another additional object is to implement a hydraulic servo-actuated valve that is simpler and more robust than existing ones.

A further object is to implement an alternative solution to the already existing hydraulic servo-actuated valves.

Said objects are achieved by a hydraulic servo-actuated valve whose inventive features are highlighted by the claims.

The invention will be better understood by the following detailed description, provided for illustration purposes only, thus without limitation, of a preferred embodiment depicted in the accompanying drawings in which:

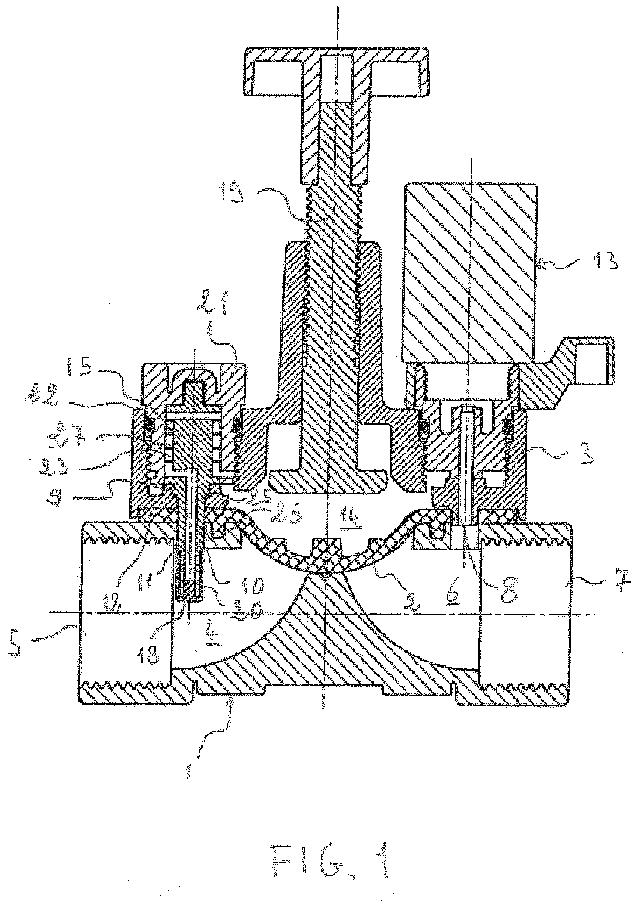

Fig. 1 shows a longitudinal sectional view of the valve according to the invention;

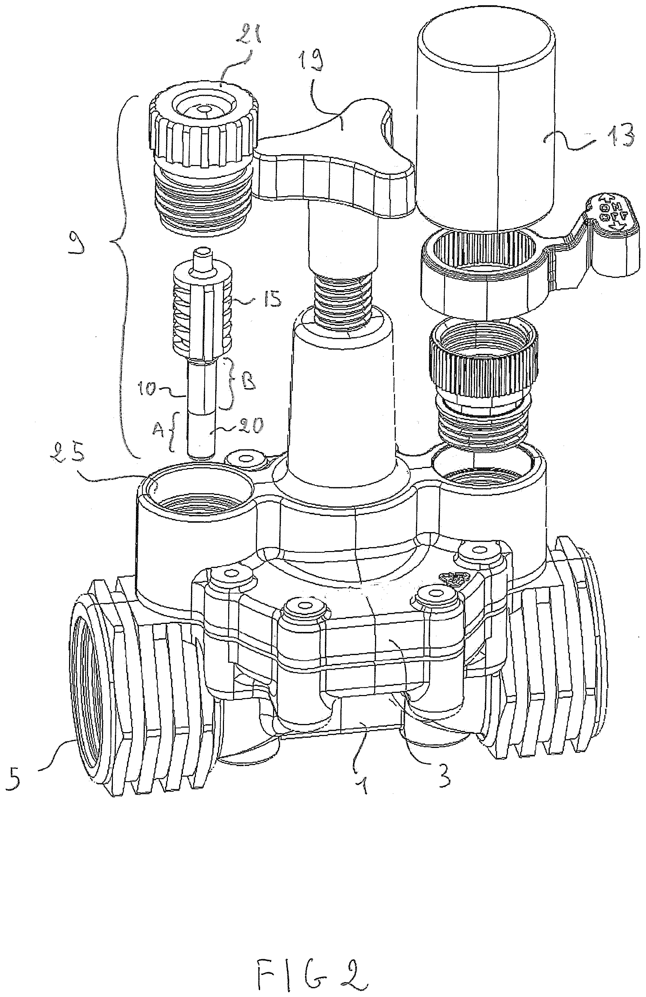

Fig. 2 shows an exploded perspective view of the valve according to the invention;

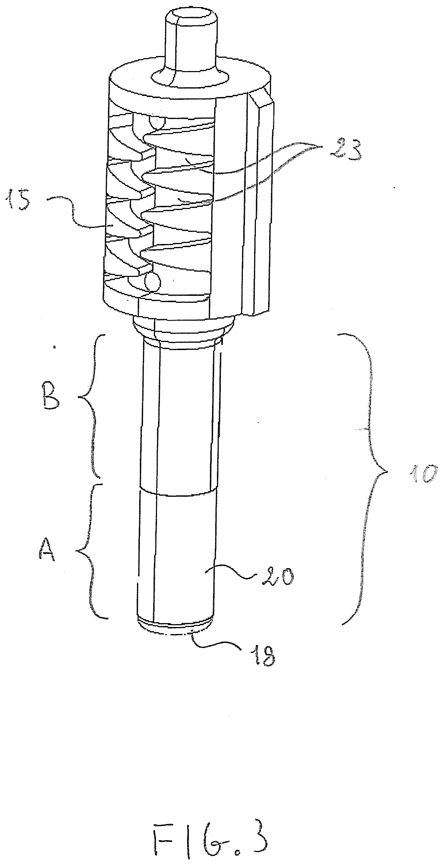

Fig. 3 shows the filter holder without knob;

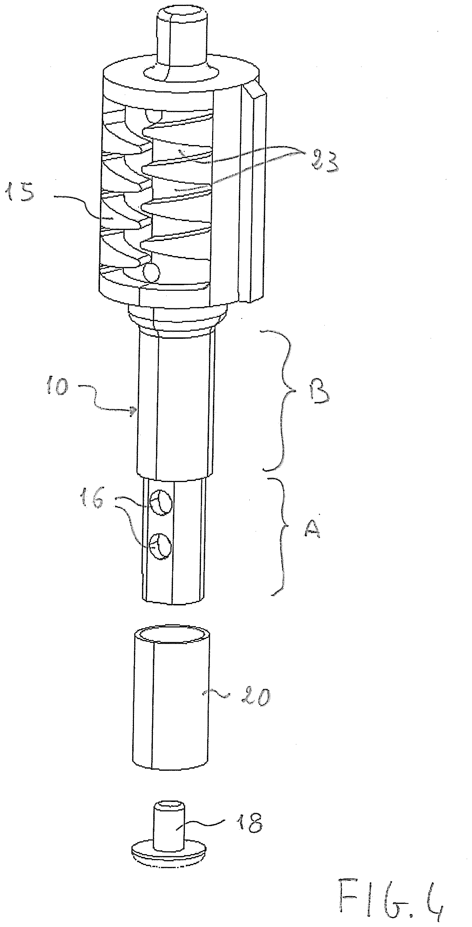

Fig. 4 shows an exploded view of the filter holder without knob.

Referring to the figures, it can be seen that the hydraulic servo-actuated valve according to the invention comprises a valve body 1, an actuator 2 and a lid 3.

The valve body 1 comprises an inlet duct 4 with an inlet opening 5, an outlet duct 6 with an outlet opening 7, a main opening 8 arranged on the valve body 1 between the inlet duct 4 and the outlet duct 6.

The actuator 2, that is a fabric-reinforced diaphragm of rubbery material, is arranged at the main opening 8 and comprises a perimeter edge 12 adapted to be tighten against the valve body by the lid 3, at the edge of the main opening 8.

The lid 3, together with the actuator 2, delimit an actuating chamber 14.

The actuator 2 is able to perform an actuating movement between an open position, which allows the flow between the inlet duct 4 and the outlet duct 6, and a closed position, which prevents the flow between the inlet duct 4 and the outlet duct 6.

The valve shown in the figure also includes a manual opening-limiter 19 that allows the actuator to rise to a predetermined limit.

In order to have a low-cost valve, the valve is adapted to be connected to a two-way operating member 13 that is adapted to control the opening and closing of the connection between the actuating chamber 14 and the outlet duct 6.

The valve further comprises a removable filter holder 9 arranged on the lid 3 at the inlet duct 4.

Said filter holder 9 comprises a stem 10 with an axial hole 11.

The stem 10 comprises a first length A and a second length B both cylindrically-shaped and joined together at their respective bases, in which the first length A of the stem 10 is adapted to receive, on the outer side surface thereof, the arrangement of the filter 20.

The first length A of the stem 10, adapted to support the filter 20, comprises one or more radial holes 16 and is smaller in diameter than that of the second length B.

The lid 3 comprises a first insertion hole 25, the inlet duct 4 comprises a second insertion hole 26, said first and second insertion holes 25 and 26 being arranged in series, i.e., in corresponding positions, and the perimeter edge 12 of the actuator 2, made of rubbery material and suitably bored, is interposed between them so as to act as a seal.

The filter 20 and the first length A of the stem 10, where the former is arranged, are adapted to penetrate into the inlet duct 4 in the radial direction, through said first and second introduction holes 25 and 26.

The first length A of the stem 10 with the filter 20 penetrates radially into the inlet duct 4, so that the filter 20 is in self-cleaning position.

The filter has a self-cleaning position if, for example, it is hit by the flow in a direction perpendicular to its side surface, with part of the filtering surface downstream and part upstream, or anyway if the filter is arranged in the flow so as not to be hit by the latter tangentially to its filtering surface, but to be hit so as to partially obstruct the fluid motion and create a pressure difference on its filtering surface sufficient to keep at least part of the latter clean.

The radial arrangement of the filter 20 in the inlet duct makes it a self-cleaning filter, due to the depression created on the downstream side of the filter hit by the fluid flow.

The filter holder 9 further comprises a labyrinth dissipator 15 connected to the stem 10.

Said labyrinth dissipator 15 comprises one or more side channels 23 that are the prolongation of the axial hole 11.

In addition, the filter holder 9 comprises a knob 21 that comprises a housing 27 adapted to accommodate the labyrinth dissipator 15.

This knob 21 is separable from the labyrinth dissipator 15.

The housing 27 of the knob 21 comprises an inner surface adapted to delimit laterally the side channels 23 of the labyrinth dissipator 15 thereby forming one or more dissipation ducts, which force the fluid to follow a tortuous path that causes significant pressure drops in the fluid flowing through them.

The knob 21 of the filter holder 9 comprises a thread adapted to be engaged in a corresponding thread arranged in the first insertion hole 25.

The filter holder 9 is arranged on the lid 3 at the inlet duct 4 and penetrates into the inlet duct 4 through said first and second insertion holes 25 and 26.

When the filter holder 9 is screwed into the first insertion hole 25 of the lid 3, the stem 10 moves forward into the inlet duct 4 in a radial direction, so that, when the filter holder 9 is fully screwed, the filter 20 takes a self-cleaning position within the inlet duct 4.

In order to make easier the manual tightening and untightening, the knob 21 comprises a knurled side edge adapted to make it easier to be gripped by hand.

The filter holder 9 comprises a plug 18 adapted to be arranged at the end of the stem 10, to close one end of the axial hole 11 and to prevent the filter 20 from slipping off the first length A of the stem 10.

In order to ensure the seal, a sealing ring 22 is arranged between the first insertion hole 25 and the filter holder 9.

The hydraulic servo-actuated valve may be adapted to be connected to a two-way operating member or may comprise a two-way operating member 13 arranged on the lid 3 at the outlet duct 6 and adapted to allow or prevent the connection between the actuating chamber 14 and the outlet duct 6.

The valve operates like a common hydraulic servo-actuated valve with a two-way operating member but, compared with existing servo-actuated valves with two-way operating members, it has the advantage that it can be used even in case of not-perfectly clean water, because the filter 20 is arranged in the inlet duct 4 in a self-cleaning position, so that it is directly hit by the fluid perpendicular to its side surface, like the filters used in three-way valves.

Compared with other valves equipped with a self-cleaning filter, the valve according to the invention allows the filter 20 to be more easily cleaned.

For this purpose, the filter holder 9 can be easily pulled out by manually unscrewing the knob 21 from the first insertion hole 25 of the lid 3 and by removing the filter holder 9 with a radial movement with respect to the inlet duct 4.

Once the filter holder 9 is pulled out, the filter 20 can be easily cleaned, for example by using a water jet or, if necessary, it can be easily replaced.

To replace the filter 20, the plug 18 is to be removed from the end of the stem 10, then the filter 20 is to be slipped off the first length A of the stem 10, after that a new filter is to be fitted onto said first length A of the stem 10, and finally the plug 18 is to be put back at the end of the stem 10.

By separating the knob 21 from the labyrinth dissipator 15, in case the side channels 23 of the labyrinth dissipator 15 have become clogged, for example due to a break in the filter 20, they can also be easily cleaned.

Having cleaned or replaced the filter 20, the filter holder 9 can be easily inserted into the inlet duct 4 through the first and second insertion holes 25 and 26, then screwed and tightened by hand.

The rubber sealing ring 22 provides a good seal between the filter holder 9 and the first insertion hole 25 that is threaded and arranged on the lid 3, even when tightening takes place by hand.

The unscrewing and screwing operation, and in particular the tightening by hand, are simplified by the fact that the valve according to the invention, as well as the filter holder 9 which comprises the knob 21, is made of plastic material, so that both the first threaded insertion hole 25 and the filter holder 9 have higher elastic deformability than they would have if they were made of metal.

Of course, instead of a labyrinth dissipator, the valve according to the invention could comprise in the filter holder 9, after the stem 10, a calibrated hole that, however, would be more difficult to clean if it clogs up. While the filters of valves controlled by three-way operating members tend to get less dirty, as water does not continuously flow through the filter when the valve is open, as regards the filter of the valve according to the invention, the water runs through it the entire time the valve remains open thus causing it to get dirtier.

For this reason, it is very important that the filter of the valve according to the invention can be cleaned easily and quickly, for example without having to remove the lid. The filter of the valve according to the invention is self-cleaning but compared with, for example, valves such as the one manufactured by RainBird, the filter cleaning operation is considerably easier, as it is only required to unscrew the knob 21, pull out the filter holder 9, clean the filter and reinsert the filter holder 9 inside the inlet duct 4.

In contrast, to clean the filter of the RainBird valve, the lid has to be disassembled and the actuator has to be removed, which is a significantly more complicated and time-consuming operation.

In the valve according to the invention, the operation of unscrewing the knob 21 and cleaning the filter 20 can generally be performed by hand, without requiring special tools, such as wrenches.

Normally, since the labyrinth dissipator 15 is arranged downstream of the filter 20, it should not clog up but it may become clogged if the filter 20 breaks.

For this reason, it is important that the labyrinth dissipator 15 can also be easily cleaned.

For the purpose, the ducts of the labyrinth dissipator 15 are formed by side channels 23 arranged on the side surface of the labyrinth dissipator 15 itself and laterally closed by the inner surface of the housing 27 of the knob 21, the housing being adapted to accommodate the labyrinth dissipator.

Clearly, the seal between the inner surface of the housing 27 and the channels of the labyrinth dissipator is not important, but once the labyrinth dissipator is removed from the housing, the side channels 23 which are open on their outer side, are easy to clean.

Some servo-actuated valves controlled by two-way operating members, such as the valve manufactured by Irritrol, have only a labyrinth dissipator but have neither a filter nor even a self-cleaning filter.

Moreover, the labyrinth dissipator of the Irritrol valve slips off axially, i.e., by a movement parallel to that in the fluid in the inlet duct 4, whereas the filter holder 9, with the labyrinth dissipator 15, of the valve according to the invention slips off radially, so that the filter 20 can be radially inserted into the inlet duct 4 and thus can be arranged in a position that allows the self-cleaning effect to be achieved.

By using a valve such as the one manufactured by Irritrol with uncleaned water, the labyrinth dissipator can be expected to become clogged quickly, although it is easy to clean by removing it axially.

By using a valve such as the one manufactured by RainBird with uncleaned water, the valve is expected to become clogged less frequently, thanks to the self-cleaning filter, but when it becomes clogged it is complicated to clean, since the lid must be removed.

On the other hand, when the valve according to the invention is used with uncleaned water, thanks to the filter in self-cleaning position it will rarely become clogged, and in case filter cleaning or replacement is required, it can be done with simple manual operations and quickly.

The valve according to the invention results to be more economical than servo-actuated valves with three-way operating members.

In addition, the valve according to the invention is more robust and simpler, and therefore less expensive, than a valve comprising a scraper such as the valve manufactured by the Hunter Company.

## Claims

1. Hydraulic servo-actuated valve comprising a valve body (1), an actuator (2) and a lid (3)
- the valve body (1) comprising an inlet duct (4), an outlet duct (6), a main opening (8) arranged on the valve body (1) between the inlet duct (4) and the outlet duct (6);
- the actuator (2) being arranged at the main opening (8);
- the lid (3), together with the actuator (2), delimiting an actuating chamber (14);
said actuator (2) being adapted to perform an actuating movement between an open position, allowing the flow between the inlet duct (4) and the outlet duct (6), and a closed position, preventing the flow between the inlet duct (4) and the outlet duct (6), said valve being adapted to connect a two-way operating member (13) that is adapted to control the opening and closing of the connection between the actuating chamber (14) and the outlet duct (6), said valve comprising a removable filter holder (9) arranged on the inlet duct (4), and a filter (20) arranged on the filter holder (9), the filter (20) penetrating into the inlet duct (4) in self-cleaning position, said filter holder (9) comprising a labyrinth dissipator (15), **characterized in that** said filter holder (9) comprises a knob (21) comprising a housing (27) adapted to accommodate the labyrinth dissipator (15), said knob (21) being separable from the labyrinth dissipator (15).

2. Servo-actuated hydraulic valve according to the preceding claim, **characterized in that** said filter (20) radially penetrates into the inlet duct (4).

3. Servo-actuated hydraulic valve according to claim 1 or 2, **characterized in that** the filter holder (9) comprises a stem (10) with a first length (A) and **in that** the filter (20) is adapted to be arranged on the outer side surface of said first length (A) of the stem (10).

4. Servo-actuated hydraulic valve according to one or more of the preceding claims, **characterized in that** the filter holder (9) is arranged on the lid (3) at the inlet duct (4), the lid (3) comprising a first insertion hole (25), the inlet duct (4) comprising a second insertion hole (26), said first and second insertion holes (25, 26) being arranged in series, the filter holder (9) penetrating into the inlet duct (4) through said first and second insertion holes (25, 26).

5. Servo-actuated hydraulic valve according to one or more of the preceding claims, **characterized in that** said labyrinth dissipator (15) comprises one or more side channels (23).

6. Servo-actuated hydraulic valve according to the preceding claim, **characterized in that** said housing (27) comprises an inner surface adapted to laterally delimit the side channels (23) of the labyrinth dissipator (15) by forming dissipation ducts.

7. Servo-actuated hydraulic valve according to claim 3 or one or more of the claims from 4 to 6 as dependent on claim 3, **characterized in that** said stem (10) comprises an axial hole (11) and **in that** said first length (A) of said stem (10) has one or more radial holes (16).

8. Servo-actuated hydraulic valve according to one or more of the preceding claims, **characterized in that** the knob (21) of the filter holder (9) comprises a thread adapted to be engaged in a first threaded insertion hole (25) arranged on the lid (3).

9. Servo-actuated hydraulic valve according to the preceding claim, **characterized in that** when the filter holder (9) is screwed into the first insertion hole (25), the filter (20) moves forward into the inlet duct (4) in a radial direction, so as to take a self-cleaning position within the inlet duct (4), when the filter holder (9) is fully screwed.

10. Servo-actuated hydraulic valve according to one or more of the preceding claims, **characterized in that** said knob (21) comprises a knurled side edge adapted to facilitate the manual gripping thereof.

11. Servo-actuated hydraulic valve according to one or more of the claims from 3 to 10, **characterized in that** it comprises a plug (18) adapted to be arranged at the end of the stem (10) and to prevent the filter (20) from slipping off the stem (10).

12. Servo-actuated hydraulic valve according to one or more of the preceding claims, **characterized in that** it comprises a two-way operating member (13) adapted to control the opening and closing of the connection between the actuating chamber (14) and the outlet duct (6).

13. Servo-actuated hydraulic valve according to the preceding claim, **characterized in that** said two-way operating member (13) is arranged on the lid (3) at the outlet duct (6).

## Patentansprüche

1. Servobetätigtes Hydraulikventil, aufweisend einen Ventilkörper (1), einen Aktuator (2) und einen Deckel (3)
- wobei der Ventilkörper (1) einen Einlasskanal (4), einen Auslasskanal (6) und eine Hauptöffnung (8) umfasst, die am Ventilkörper (1) zwischen dem Einlasskanal (4) und dem Auslasskanal (6) angeordnet ist;
- wobei der Aktuator (2) an der Hauptöffnung (8) angeordnet ist;
- wobei der Deckel (3) zusammen mit dem Aktuator (2) eine Betätigungskammer (14) begrenzt;
wobei der Aktuator (2) dazu angepasst ist, eine Betätigungsbewegung zwischen einer offenen Position, die den Durchfluss zwischen dem Einlasskanal (4) und dem Auslasskanal (6) ermöglicht, und einer geschlossenen Position, die den Durchfluss zwischen dem Einlasskanal (4) und dem Auslasskanal (6) verhindert, auszuführen, wobei das Ventil dazu angepasst ist, ein Zweiwege-Bedienelement (13) anzuschließen, das dazu angepasst ist, das Öffnen und Schließen der Verbindung zwischen der Betätigungskammer (14) und dem Auslasskanal (6) zu steuern, wobei das Ventil einen abnehmbaren Filterhalter (9) aufweist, der auf dem Einlasskanal (4) angeordnet ist, und einen Filter (20) aufweist, der auf dem Filterhalter (9) angeordnet ist, wobei der Filter (20) in einer selbstreinigenden Position in den Einlasskanal (4) eindringt, wobei der Filterhalter (9) einen Labyrinthdissipator (15) aufweist, **dadurch gekennzeichnet, dass** der Filterhalter (9) einen Knopf (21) mit einem Gehäuse (27) aufweist, das zur Aufnahme des Labyrinthdissipators (15) angepasst ist, wobei der Knopf (21) vom Labyrinthdissipator (15) trennbar ist.

2. Servobetätigtes Hydraulikventil nach dem vorhergehenden Anspruch,
**dadurch gekennzeichnet, dass** der Filter (20) radial in den Einlasskanal (4) eindringt.

3. Servobetätigtes Hydraulikventil nach Anspruch 1 oder 2, **dadurch gekennzeichnet, dass** der Filterhalter (9) einen Schaft (10) mit einer ersten Länge (A) aufweist und dass der Filter (20) angepasst ist, dass er an der äußeren Seitenfläche der ersten Länge (A) des Schafts (10) angeordnet werden kann.

4. Servobetätigtes Hydraulikventil nach einem oder mehreren der vorhergehenden Ansprüche, **dadurch gekennzeichnet, dass** der Filterhalter (9) am Deckel (3) am Einlasskanal (4) angeordnet ist, wobei der Deckel (3) ein erstes Einsteckloch (25) aufweist und der Einlasskanal (4) ein zweites Einsteckloch (26) aufweist, wobei das erste und das zweite Einsteckloch (25, 26) in Reihe angeordnet sind und der Filterhalter (9) durch das erste und das zweite Einsteckloch (25, 26) in den Einlasskanal (4) eindringt.

5. Servobetätigtes Hydraulikventil nach dem vorhergehenden Anspruch,
**dadurch gekennzeichnet, dass** der Labyrinthdissipator (15) einen oder mehrere Seitenkanäle (23) aufweist.

6. Servobetätigtes Hydraulikventil nach dem vorhergehenden Anspruch,
**dadurch gekennzeichnet, dass** das Gehäuse (27) eine Innenfläche aufweist, die dazu angepasst ist, die Seitenkanäle (23) des Labyrinthdissipators (15) durch Bildung von Dissipationskanälen seitlich abzugrenzen.

7. Servobetätigtes Hydraulikventil nach Anspruch 3 oder nach einem oder mehreren der vorhergehenden Ansprüche 4 bis 6, soweit rückbezogen auf Anspruch 3, **dadurch gekennzeichnet, dass** der Schaft (10) ein axiales Loch (11) aufweist und dass die erste Länge (A) des Schafts (10) ein oder mehrere radiale Löcher (16) aufweist.

8. Servobetätigtes Hydraulikventil nach einem oder mehreren der vorhergehenden Ansprüche, **dadurch gekennzeichnet, dass** der Knopf (21) des Filterhalters (9) ein Gewinde aufweist, das angepasst ist, in ein erstes Gewindeeinsteckloch (25) einzugreifen, das am Deckel (3) angeordnet ist.

9. Servobetätigtes Hydraulikventil nach dem vorhergehenden Anspruch,
**dadurch gekennzeichnet, dass** sich der Filter (20) beim Einschrauben des Filterhalters (9) in die erste Einstecköffnung (25) in einer radialen Richtung nach vorn in den Einlasskanal (4) bewegt, um bei vollständig eingeschraubtem Filterhalter (9) eine selbstreinigende Position innerhalb des Einlasskanals (4) einzunehmen.

10. Servobetätigtes Hydraulikventil nach einem oder mehreren der vorhergehenden Ansprüche, **dadurch gekennzeichnet, dass** der Knopf (21) eine geriffelte Seitenkante aufweist, die angepasst ist, das manuelle Greifen zu erleichtern.

11. Servobetätigtes Hydraulikventil nach einem oder mehreren der Ansprüche 3 bis 10, **dadurch gekennzeichnet, dass** es einen Stopfen (18) aufweist, der angepasst ist, am Ende des Schafts (10) angeordnet zu werden und ein Abrutschen des Filters (20) vom Schaft (10) verhindert.

12. Servobetätigtes Hydraulikventil nach einem oder mehreren der vorhergehenden Ansprüche, **dadurch gekennzeichnet, dass es** ein Zweiwege-Betätigungselement (13) umfasst, das angepasst ist, das Öffnen und Schließen der Verbindung zwischen der Betätigungskammer (14) und dem Auslasskanal (6) zu steuern.

13. Servobetätigtes Hydraulikventil nach dem vorhergehenden Anspruch,
**dadurch gekennzeichnet, dass** das Zweiwege-Betätigungselement (13) am Deckel (3) am Auslasskanal (6) angeordnet ist.

## Revendications

1. Soupape à servocommande hydraulique comprenant un corps de soupape (1), un actionneur (2) et un couvercle (3)
- le corps de soupape (1) comprenant un conduit d'entrée (4), un conduit de sortie (6), une ouverture principale (8) disposée sur le corps de soupape (1) entre le conduit d'entrée (4) et le conduit de sortie (6) ;
- l'actionneur (2) étant disposé au niveau de l'ouverture principale (8) ;
- le couvercle (3) délimitant, avec l'actionneur (2), une chambre d'actionnement (14) ;
ledit actionneur (2) étant adapté pour effectuer un mouvement d'actionnement entre une position ouverte, permettant l'écoulement entre le conduit d'entrée (4) et le conduit de sortie (6), et une position fermée, empêchant l'écoulement entre le conduit d'entrée (4) et le conduit de sortie (6), ladite soupape étant adaptée pour connecter un organe de commande bidirectionnel (13) qui est adapté pour contrôler l'ouverture et la fermeture de la connexion entre la chambre d'actionnement (14) et le conduit de sortie (6), ladite soupape comportant un porte-filtre amovible (9) disposé sur le conduit d'entrée (4), et un filtre (20) disposé sur le porte-filtre (9), le filtre (20) pénétrant dans le conduit d'entrée (4) en position d'autonettoyage, ledit porte-filtre (9) comportant un dissipateur à labyrinthe (15), **caractérisé en ce que** ledit porte-filtre (9) comprend un bouton (21) comportant un boîtier (27) adapté pour recevoir le dissipateur à labyrinthe (15), ledit bouton (21) étant séparable du dissipateur à labyrinthe (15).

2. Soupape hydraulique à servocommande selon la revendication précédente, **caractérisée en ce que** ledit filtre (20) pénètre radialement dans le conduit d'entrée (4).

3. Soupape hydraulique à servocommande selon la revendication 1 ou 2, **caractérisée en ce que** le porte-filtre (9) comprend une tige (10) avec une première longueur (A) et **en ce que** le filtre (20) est adapté pour être disposé sur la surface latérale extérieure de ladite première longueur (A) de la tige (10).

4. Soupape hydraulique à servocommande selon l'une ou plusieurs des revendications précédentes, **caractérisée en ce que** le porte-filtre (9) est disposé sur le couvercle (3) au niveau du conduit d'entrée (4), le couvercle (3) comportant un premier trou d'insertion (25), le conduit d'entrée (4) comprenant un second trou d'insertion (26), lesdits premier et second trous d'insertion (25, 26) étant disposés en série, le porte-filtre (9) pénétrant dans le conduit d'entrée (4) par lesdits premier et second trous d'insertion (25, 26).

5. Soupape hydraulique à servocommande selon l'une ou plusieurs des revendications précédentes, **caractérisée en ce que** ledit dissipateur à labyrinthe (15) comprend un ou plusieurs canaux latéraux (23).

6. Soupape hydraulique à servocommande selon la revendication précédente, **caractérisée en ce que** ledit boîtier (27) comprend une surface intérieure apte à délimiter latéralement les canaux latéraux (23) du dissipateur à labyrinthe (15) en formant des conduits de dissipation.

7. Soupape hydraulique à servocommande selon la revendication 3 ou l'une ou plusieurs des revendications de 4 à 6 en tant que dépendante de la revendication 3 **caractérisée en ce que** ladite tige (10) comporte un trou axial (11) et **en ce que** ladite première longueur (A) de ladite tige (10) comporte un ou plusieurs trous radiaux (16).

8. Soupape hydraulique à servocommande selon l'une ou plusieurs des revendications précédentes, **caractérisée en ce que** le bouton (21) du porte-filtre (9) comporte un filetage apte à être engagé dans un premier trou d'insertion fileté (25) ménagé sur le couvercle (3).

9. Soupape hydraulique à servocommande selon la revendication précédente, **caractérisée en ce que** lorsque le porte-filtre (9) est vissé dans le premier trou d'insertion (25), le filtre (20) se déplace vers l'avant dans le conduit d'entrée (4) dans une direction radiale, de manière à prendre une position d'autonettoyage à l'intérieur du conduit d'entrée (4), lorsque le porte-filtre (9) est complètement vissé.

10. Soupape hydraulique à servocommande selon l'une ou plusieurs des revendications précédentes, **caractérisée en ce que** ledit bouton (21) comporte un bord latéral moleté adapté pour en faciliter la préhension manuelle.

11. Soupape hydraulique à servocommande selon l'une ou plusieurs des revendications 3 à 10, **caractérisée en ce qu'**elle comprend un bouchon (18) destiné à être disposé à l'extrémité de la tige (10) et à empêcher le filtre (20) de glisser de la tige (10).

12. Soupape hydraulique à servocommande selon l'une ou plusieurs des revendications précédentes, **caractérisée en ce qu'**elle comprend un organe de commande bidirectionnel (13) apte à commander l'ouverture et la fermeture de la liaison entre la chambre d'actionnement (14) et le conduit de sortie (6).

13. Soupape hydraulique à servocommande selon la revendication précédente, **caractérisée en ce que** ledit organe de commande bidirectionnel (13) est disposé sur le couvercle (3) au niveau du conduit de sortie (6).
